# EUROPÄISCHE PATENTSCHRIFT

(11) **EP 2 939 758 B1**
(45) Veröffentlichungstag und Bekanntmachung des Hinweises auf die Patenterteilung: **16.01.2019**
(21) Anmeldenummer: 14166447.4
(22) Anmeldetag: 29.04.2014
(51) Int. Cl.: B21D 55/00, F16P 3/14

(54) **Umformvorrichtung zur plastischen Umformung eines Bauteils mit einem Schutzsystem**
Forming device for plastically forming a component comprising a safety device
Dispositif de déformation pour la déformation plastique d'un composant comprenant un système de sécurité

(43) Veröffentlichungstag der Anmeldung: 04.11.2015
(73) Patentinhaber: Schechtl Maschinenbau GmbH, 83533 Edling (DE)
(72) Erfinder: Schmelmer Matthias, 83539 Pfaffing (DE)
(74) Vertreter: Hofstetter, Schurack & Partner

(56) Entgegenhaltungen:
- EP-A1- 1 522 784
- EP-A1- 2 633 925
- DE-A1- 19 717 299
- US-A- 5 253 498

## Beschreibung

Die Erfindung betrifft eine Umformvorrichtung zur plastischen Verformung eines Bauteils, insbesondere eines Blechbauteils, gemäß dem Oberbegriff von Patentanspruch 1.
Beim Umformen von Bauteilen, insbesondere von metallischen Halbzeugen bzw. Blechbauteilen werden bekanntermaßen - je nach Art des Umformprozesses - beispielsweise Schwenkbiegemaschinen oder Pressmaschinen zur plastischen Verformung der jeweiligen Bauteile als Umformvorrichtung eingesetzt. In Abhängigkeit der Materialeigenschaften, wie beispielsweise dem E-Modul oder der Härte des jeweiligen Bauteils kann dieses je nach Art des Umformverfahrens einer Druck-, Zug-, Schub-, oder Biegeumformung unterzogen werden, wobei vor allem aus einem Metall gebildete Bauteile für die eben genannten Umformverfahren besonders geeignet sind. Je nach Einsatzgebiet können als Werkstoffe für das für den Umformprozess vorgesehene Bauteil beispielsweise Stahl, Aluminium, Kupfer oder Legierungen wie Messing verwendet werden. Neben den metallischen Werkstoffen können auch andere Materialien, wie beispielsweise Kunststoffe umgeformt werden. Üblicherweise wirken beim Umformen sehr hohe Kräfte, welche bei Unfällen mit Personenbeteiligung zumindest zu schweren Quetschungen oder sogar zum Abtrennen von Gliedmaßen führen können.
Um Verletzungen des Bedienpersonals derartiger Umformvorrichtungen zu vermeiden, werden üblicherweise Schutzsysteme, wie z.B. Näherungssensoren, Lichtschranken oder dergleichen eingesetzt, mittels welchen ein Abschalten der Umformvorrichtung erfolgt, sobald diese Schutzsysteme aktiviert, bzw. ausgelöst werden.

Die EP 2 633 925 A1 offenbart eine gattungsgemässe Umformvorrichtung, nämlich eine Schwenkbiegemaschine mit einer Überwachungseinrichtung sowie ein Verfahren zum Betreiben einer solchen Schwenkbiegemaschine. Die Schwenkbiegemaschine umfasst dabei ein Maschinenbett mit einem Werkstücktisch und einer Werkstückauflagefläche, wobei dem Werkstücktisch schwenkbeweglich eine Biegewange zugeordnet ist. Dafür sind an zwei seitlichen Endbereichen der Werkstückauflagefläche jeweilige Schwenkgelenke vorgesehen, welchen ein Sender beziehungsweise ein Empfänger der optischen Überwachungseinrichtung zugeordnet ist. Der Sender und der Empfänger können derart in jeweiligen Hohlwellen der Schwenkgelenke aufgenommen sein, dass ein von dem Sender ausgehender Kontrollstrahl in einem um eine Schwenkachse ausgebildeten Hüllzylinder verläuft. Insgesamt soll damit eine Überwachung des Einspannvorgangs für ein Werkstück überwachbar sein.

Ein weiteres Schutzsystem ist der EP 1 522 784 A1 als bekannt zu entnehmen. Das dortige Schutzsystem ist an jeweiligen Haltearmen an einem Oberwerkzeug einer als Biegepresse ausgestalteten Biegevorrichtung vorgesehen und umfasst mehrere Lichtschranken, welche derart zueinander angeordnet sind, dass sie ein volumenförmiges Schutzfeld bilden, welches einen Abschnitt um das Oberwerkzeug zumindest teilweise umgibt. Beim Eindringen in dieses Schutzfeld wird das Oberwerkzeug der Biegepresse angehalten um das Bedienpersonal vor Verletzungen zu bewahren.

Allerdings kann es hierbei jedoch auch zu einer Störung im Bearbeitungsprozess durch unbeabsichtigtes Eindringen in das Schutzfeld und damit zu ungewolltem Stillstand der Umformvorrichtung kommen.

Es ist Aufgabe der Erfindung, eine Umformvorrichtung zur plastischen Verformung eines Bauteils, insbesondere eines Blechbauteils zu schaffen, mittels welcher auf besonders einfache und günstige Art und Weise eine Störung im Bearbeitungsprozess vermieden und zudem das Bedienpersonal wirksam vor Verletzungen geschützt werden kann.

Diese Aufgabe wird durch eine Umformvorrichtung mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Eine erfindungsgemäße Umformvorrichtung zur plastischen Verformung eines Bauteils, insbesondere eines Blechbauteils, umfasst ein Oberteil und ein Unterteil zwischen welchen das Bauteil fixierbar und unter einer Relativbewegung zwischen dem Unterteil und dem Oberteil verformbar ist, und ein das Oberteil und das Unterteil aufnehmendes Maschinengestell, welches einen Arbeitsbereich der Umformvorrichtung, in welchem das Bauteil verformbar ist, zumindest bereichsweise begrenzt, sowie eine Sensoreinrichtung zum zumindest bereichsweisen, berührungslosen Überwachen des Arbeitsbereiches mittels durch die Sensoreinrichtung emittierbarer Strahlung. Dabei weist die Sensoreinrichtung wenigstens ein Emitterbauteil auf, mittels welchem die Strahlung durch mindestens eine Emitteröffnung in dem Maschinengestell in den Arbeitsbereich hinein emittierbar ist, wobei die Emitteröffnung in einem Bereich eines Drehpunkts der Relativbewegung zwischen dem Unterteil und dem Oberteil angeordnet ist. Während in aus dem Stand der Technik bekannten Lösungen Schutzsysteme und dazugehörige Sensoren am Oberwerkzeug vorgesehen sind, ist die erfindungsgemäße Sensoreinrichtung außerhalb des Arbeitsbereichs der Umformvorrichtung angeordnet und stellt somit kein Hindernis für das in dem Arbeitsbereich zu bearbeitende Bauteil dar. Die Strahlung wird dementsprechend von außen in einem insbesondere vorgebbaren horizontalen und vertikalen Abstand zu dem Drehpunkt der Relativbewegung durch den Arbeitsbereich geführt. Dadurch wird nur der tatsächlich vor einem manuellen Eingriff zu sichernde Bereich der Umformvorrichtung gesichert, wodurch die Wahrscheinlichkeit, ein sicherheitsbedingtes Abschalten der Umformvorrichtung unbeabsichtigt auszulösen, auf ein Minimum reduziert werden kann. So ist es z.B. bei als Biegemaschinen ausgestalteten Umformvorrichtungen vorteilhaft, vor allem den Drehpunkt der Relativbewegung mittels der durch die Sensoreinrichtung emittierten Strahlung gegenüber manuellen Eingriffen des Bedienpersonals abzusichern. Gerade im Bereich dieses Drehpunktes ist das Verletzungsrisiko besonders hoch, da das sich unter der Relativbewegung zwischen dem Oberteil und dem Unterteil verformende Bauteil im Bereich des Drehpunktes besonders stark deformiert wird, eine akute Gefahr des Einquetschens besteht und somit in dieser Zone das Verletzungsrisiko besonders hoch ist. Die vorteilhafte Anordnung der Emitteröffnung ermöglicht eine Überwachung des Arbeitsbereiches, ohne dass Teile der Sensoreinrichtung, wie das Emitterbauteil, in dem Arbeitsbereich angeordnet werden müssen und damit bei z.B. bei der Bestückung der Umformvorrichtung mit dem Bauteil im Weg wären. Mit anderen Worten dringen einzelne Bauteile der Sensoreinrichtung nicht in den Arbeitsbereich ein und stören somit nicht die Ausführung der üblichen Arbeitsschritte, da die Strahlung durch die Emitteröffnung geführt wird.

Insbesondere kann das Emitterbauteil an einer dem Arbeitsbereich der Umformvorrichtung abgewandten Emitterseite des Maschinengestells angeordnet sein. Ein Einstellen des Vertikalabstandes und des Horizontalabstandes zeigt jedoch noch einen weiteren Vorteil, welcher in der Detektion des Umformprozesses begründet liegt. So kann beispielsweise das Einstellen der jeweiligen Abstände vom Drehpunkt derart erfolgen, dass ein bestimmter Umformzustand des Bauteils durch dessen zumindest teilweises Überdecken der Strahlung bei der Umformung und damit durch Verringerung der Strahlungsintensität detektiert werden kann. Demzufolge könnte z.B. bei einer ungünstig verlaufenden Biegelinie des umzuformenden Bauteils eine Abweichung der Strahlungsintensität von einer Sollintensität detektiert werden, wobei die Sollintensität einem wunschgemäßen Verlauf der Biegelinie entspricht. Somit könnte bei zu starker Schwächung der Strahlung, infolge von die Strahlung zu sehr blockierenden Verwerfungen entlang der Biegelinie frühzeitig ein Ausschuss (z.B. eine verformte und somit mangelhafte Biegelinie aufgrund von Lunkern oder aufgrund einer anderen Materialinhomogenität) detektiert werden. Es ist klar, dass hierfür der Vertikalabstand und der Horizontalabstand einen besonders geringen Abstandswert zu der Biegelinie aufweisen sollten, was jedoch im Hinblick auf die Sicherung der Umformvorrichtung gegenüber für das Bedienpersonal gefährlichen, manuellen Eingriffen ebenfalls von besonderem Vorteil ist, da durch diese besonders enge Abstandseinstellung ein unbeabsichtigtes Unterbrechen des Umformprozesses weitgehend ausgeschlossen werden kann.

Es ist sogar denkbar, dass der Durchmesser der Strahlung den Schutzbereich in dem Arbeitsbereich begrenzt, d.h. dass ein einzelner Sensorstrahl mit einem bestimmten Durchmesser durch den Arbeitsbereich hindurchdringt und bei zumindest teilweiser Unterbrechung und daraus resultierender Schwächung der Strahlung ein Abschalten der Umformvorrichtung, bzw. ein Unterbrechen des Umformprozesses erfolgt.

In vorteilhafter Weise ist an einer dem Arbeitsbereich abgewandten Emitterseite des Maschinengestells das Emitterbauteil angeordnet, mittels welchem die Strahlung durch die Emitteröffnung in dem Maschinengestell in den Arbeitsbereich und in einem einstellbaren Vertikalabstand sowie in einem einstellbaren Horizontalabstand zu dem Drehpunkt der Relativbewegung zwischen dem Unterteil und dem Oberteil durch den Arbeitsbereich hindurch emittierbar ist.

Um den Arbeitsbereich besonders bedarfsgerecht zu begrenzen und der Umformvorrichtung unter möglichst geringem Materialaufwand und somit besonders kostengünstig eine ausreichend hohe Steifigkeit zu verleihen, umfasst das Maschinengestell ein den Arbeitsbereich seitlich begrenzendes erstes Seitenteil und wenigstens ein den Arbeitsbereich seitlich begrenzendes zweites Seitenteil, welche zu jeweils einander gegenüberliegenden Seiten des Arbeitsbereiches angeordnet sind. Die dem Arbeitsbereich abgewandte Seite des ersten Seitenteils könnte beispielsweise der Emitterseite entsprechen, an welcher das Emitterbauteil der Sensoreinrichtung aufgenommen ist. Somit können die Sensoreinrichtung und z.B. ein die Umformvorrichtung antreibender Elektromotor und optional ein davon angetriebenes Getriebe (z.B. eine Zahnradübersetzung) durch eine einzige gemeinsame Abdeckung geschützt werden, wodurch bei Wartungsarbeiten dementsprechend die Anzahl von zu entfernenden Abdeckungen auf eine Minimum reduziert werden kann, welche abzumontieren sind, um an alle zu wartenden Komponenten - zu denen auch die Sensoreinrichtung gehört - zu gelangen.

In der Erfindung weist die Sensoreinrichtung wenigstens ein Empfängerbauteil auf, welches an einer von dem Arbeitsbereich abgewandten, der Emitterseite des Maschinengestells gegenüberliegenden Empfängerseite des zweiten Seitenteils angeordnet ist. Durch das Anordnen des Empfängerbauteils außerhalb des Arbeitsbereichs kann dieses - ebenso wie auch das Emitterbauteil - besonders wirksam vor Beschädigungen, wie sie z.B. durch das Einlegen, Umformen oder Entfernen des umzuformenden Bauteils hervorgerufen werden können, geschützt werden. Wird beispielsweise ein zu biegendes Blech als das Bauteil in die Umformvorrichtung eingelegt, so wird ein Anstoßen des Blechs an das Empfängerbauteil durch dessen Anordnung auf der dem Arbeitsbereich abgewandten Seite besonders einfach unterbunden.

Mittels des Empfängerbauteils ist die durch das Emitterbauteil emittierbare Strahlung durch eine mit der Emitteröffnung fluchtende Empfängeröffnung, welche an dem zweiten Seitenteil angeordnet ist, empfangbar. Die Emitteröffnung und die Empfängeröffnung können dabei gerade derart in ihrem Querschnitt dimensioniert sein, dass ein ungehindertes Emittieren bzw. Empfangen der Strahlung durch die jeweiligen Öffnungen ermöglicht wird. Somit wird auch weitgehend ausgeschlossen, dass eine Beschädigung des Emitterbauteils durch teilweises Eindringen umzuformender Bauteile - z.B. beim Bestücken der Umformvorrichtung mit den Bauteilen - erfolgt, da jeweilige Öffnungsquerschnitte so klein wie möglich dimensioniert werden können. Durch das Fluchten der Empfängeröffnung mit der Emitteröffnung können beide Öffnungen mit anderen Worte besonders klein und mit besonders geringem Querschnitt ausgebildet sein, was die Beschädigungsgefahr der Sensoreinrichtung weiter verringert.

In einer weiteren vorteilhaften Ausgestaltung der Erfindung ist als der Vertikalabstand der Abstand zwischen einer Biegeschiene des Unterteils und der Strahlung einstellbar. Die Biegeschiene stellt eine besonders geeignete Referenz dar, anhand welcher der Vertikalabstand eingestellt werden kann, da die Biegeschiene, bzw. deren Gestalt direkt die Biegelinie des umzuformenden Bauteils und damit den für das Bedienpersonal besonders gefährlichen Bereich des Arbeitsbereiches definiert.

Von Vorteil ist weiterhin, wenn die Strahlung als Lichtstrahlung, insbesondere als Laserstrahlung, ausgebildet ist. Eine Überwachung des Arbeitsbereiches mittels Lichtstrahlung und insbesondere Laserstrahlung bietet eine besonders ausgereifte und zuverlässige Möglichkeit, das Bedienpersonal vor Verletzungen zu bewahren, da eine Unterbrechung der Strahlung - z.B. im Vergleich zu auf Ultraschall basierenden Sensoreinrichtungen - besonders rasch detektiert werden kann. Die Verwendung eines Lasers, also gebündelten Lichtes ist dabei noch weniger störungsanfällig - z.B. hinsichtlich der Lichtverhältnisse oder etwaiger Reflexionen im Bereich um die Umformvorrichtung - als eine konventionelle Lichtquelle, welche eine geringere Strahlungsintensität aufweist, als die Laserstrahlung.

In einer weiteren vorteilhaften Ausführungsform der Erfindung ist die Umformvorrichtung in Abhängigkeit eines Strahlengangs der Strahlung von einem Betriebszustand in wenigstens einen von dem Betriebszustand verschiedenen Zustand schaltbar. Der Strahlengang beschreibt den geometrischen Verlauf von Strahlen. Der Strahlengang berücksichtigt dabei auch den Durchmesser der Strahlung. Wird der Strahlengang beim Umformen verändert, also z.B. abgelenkt oder teilweise abgedeckt, so kann die Umformvorrichtung in Abhängigkeit dieser Veränderung z.B. in einen langsameren Betriebsmodus geschaltet werden. Ein Ablenken, oder teilweises Abdecken des Strahlengangs kann auf einen bestimmten Biegegrad des Bauteils hindeuten, wobei es zu einem teilweisen Abdecken des Strahlengangs z.B. durch umgeformte Bereiche des umzuformenden Bauteils kommen kann. In diesem Fall kann die Umformvorrichtung beispielsweise in einen langsameren Betriebszustand geschaltet werden, sobald z.B. durch die Abdeckung des Strahlengangs ein bestimmter Biegegrad des Bauteils detektiert wird und demzufolge eine Annäherung an einen gewünschten Endzustand der Umformbewegung erfolgt.

Von weiterem Vorteil ist es, wenn die Umformvorrichtung mit einer Unterbrechung des Strahlengangs ausschaltbar ist. Ein Ausschalten ist besonders sinnvoll, wenn der Strahlengang plötzlich unterbrochen wird, da dies auf ein Eindringen von Fremdkörpern, wozu auch z.B. Gliedmaßen des Bedienpersonals der Umformvorrichtung gehören, in den Arbeitsbereich hindeutet.

In einer weiteren vorteilhaften Ausführungsform umfasst die Umformvorrichtung eine Recheneinrichtung, mittels welcher ein von der Sensoreinrichtung in Abhängigkeit von dem Strahlengang abgegebener Signaldatensatz empfangbar und auswertbar ist. Mittels der Recheneinrichtung kann eine besonders zuverlässige Auswertung der Änderung des Strahlengangs erfolgen, da der dazugehörige Signaldatensatz eine Aussage über die Art einer zumindest teilweisen Unterbrechung des Strahlengangs oder einer Ablenkung des Strahlengangs ermöglicht. Demzufolge könnte mittels der Recheneinrichtung auch ausgewertet werden, von welcher Richtung aus kommend der Strahlengang unterbrochen, bzw. bereichsweise bedeckt wird. Somit kann anhand der Recheneinrichtung unterschieden werden, ob Gliedmaßen des Bedienpersonals in den Gefahrenbereich der Umformvorrichtung eingedrungen sind, oder ob eine bereichsweise Überdeckung des Strahlengangs einer etwaigen in den Strahlengang hineinragenden Verwölbung des umzuformenden Bauteils geschuldet ist.

Von weiterem Vorteil ist es, wenn die Umformvorrichtung mittels der Recheneinrichtung in einen Notauszustand schaltbar ist. Das Schalten in einen Notauszustand bietet besonders weitreichenden Schutz vor Verletzungen. So kann es zur Erhöhung der Sicherheit vorgesehen sein, dass - sobald die Umformvorrichtung in den Notauszustand geschaltet ist - ein von dem Arbeitsbereich entfernter Notausschalter zu betätigen ist, um den normalen Betrieb wieder aufzunehmen. Die für den Notauszustand verantwortliche Person, welche z.B. den Strahlengang unterbrochen hat, muss sich dabei zwangsläufig aus dem Gefahrenbereich entfernen, um den Notauszustand der Umformvorrichtung wieder zu deaktivieren. Dieser Umstand bietet eine besonders große Sicherheit für das Bedienpersonal.

Schließlich ist es vorteilhaft, wenn die Umformvorrichtung als Schwenkbiegemaschine ausgebildet ist. Eine Schwenkbiegemaschine weist einen besonders eng begrenzten Gefahrenbereich in deren Arbeitsbereich auf. Der Gefahrenbereich ist im Wesentlichen auf den Bereich um die Biegelinie des umzuformenden Bauteils begrenzt, wodurch die Überwachung mittels der Sensoreinrichtung und somit mittels der Strahlung besonders geeignet ist, um eine besonders hohe Bediensicherheit bei gleichzeitig minimalem Störungsrisiko zu gewährleisten. Dieses Störungsrisiko bezieht sich insbesondere auf eine ungewollte Unterbrechung des Umformprozesses, z.B. infolge von unbeabsichtigter Unterbrechung der Strahlung, bzw. des Strahlengangs beim Vorbeigehen des Bedienpersonals an der Umformvorrichtung.

Weitere vorteilhafte Merkmale und Einzelheiten der Erfindung ergeben sich aus den Ansprüchen, der nachfolgenden Beschreibung eines Ausführungsbeispiels der Erfindung sowie anhand der Zeichnungen.
Es zeigen:

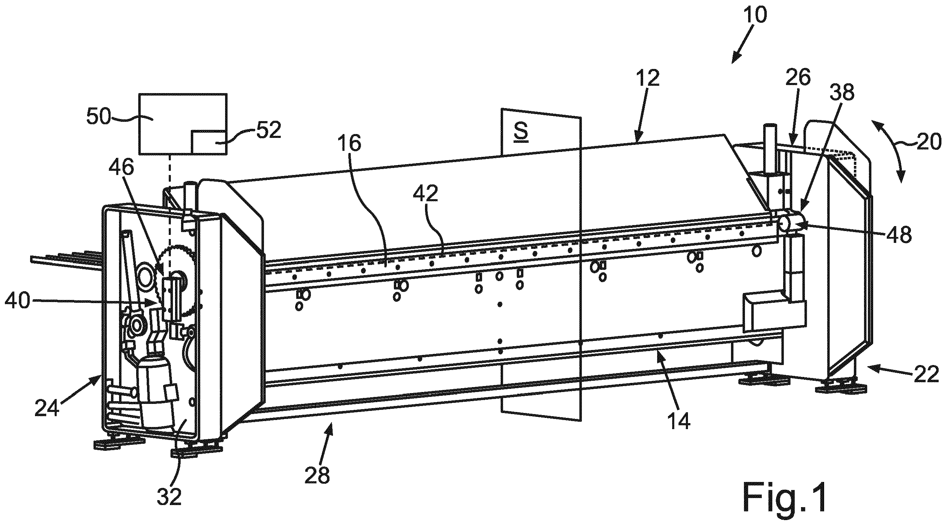

- Fig. 1: eine Perspektivansicht einer als Schwenkbiegemaschine ausgebildeten Umformvorrichtung gemäß einem Ausführungsbeispiel der Erfindung, mit einem Maschinengestell, an welchem ein Oberteil und ein Unterteil der Umformvorrichtung gelagert sind, wobei an dem Maschinengestell eine Emitterbauteil einer Sensoreinrichtung zum Überwachen eines Arbeitsbereiches der Umformvorrichtung angeordnet ist;

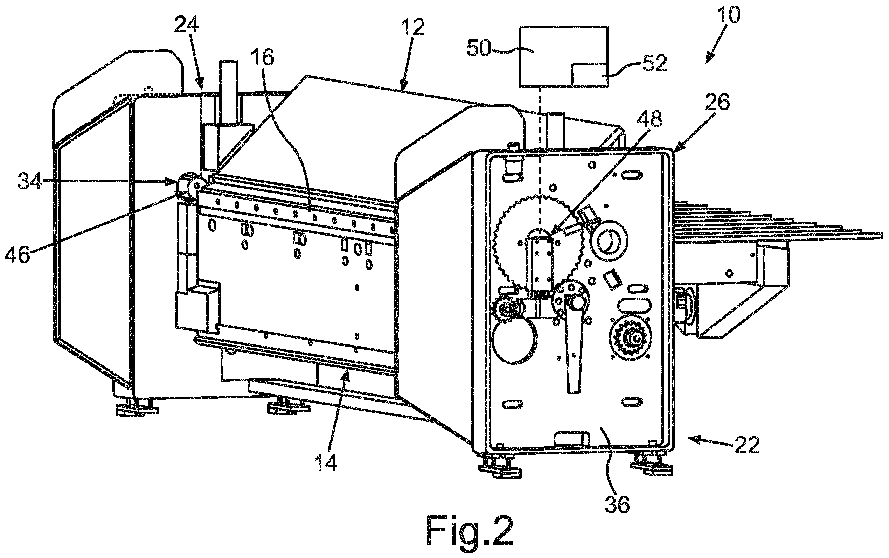

- Fig. 2: eine weitere Perspektivansicht der bereits in Fig. 1 gezeigten Umformvorrichtung, wobei an dem Maschinengestell ein Empfängerbauteil der Sensoreinrichtung zum Empfangen von durch das Emitterbauteil emittierter Strahlung angeordnet ist;

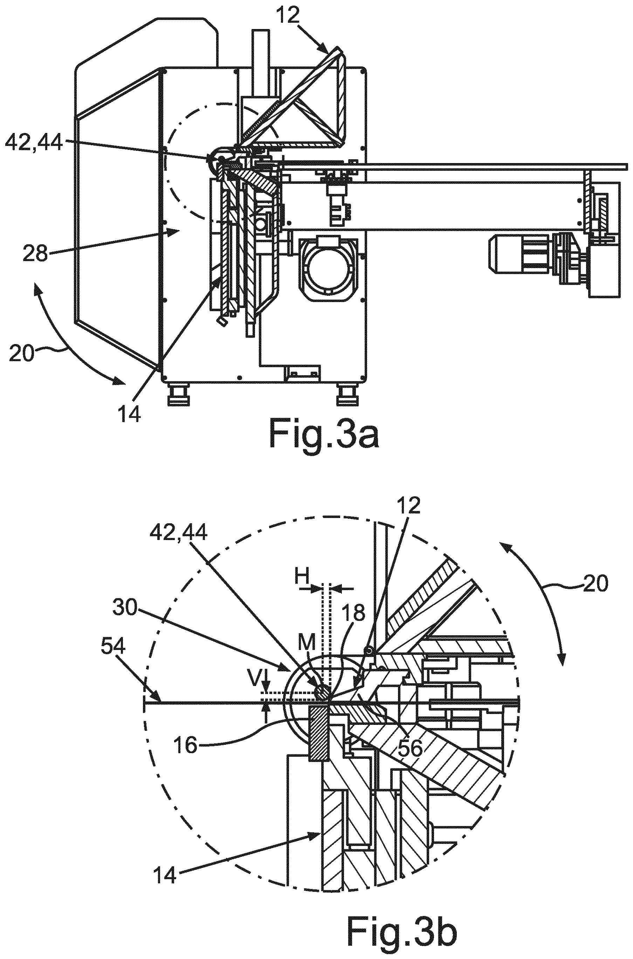

- Fig. 3a: eine Schnittansicht der in Fig. 1 dargestellten Umformvorrichtung entsprechend einer in Fig.1 gekennzeichneten Schnittebene S; und in
- Fig. 3b: eine Detailansicht eines in Fig. 3a markierten Bereiches B, wobei gezeigt ist, dass von der Sensorvorrichtung emittierte Strahlung durch eine Emitteröffnung in dem Maschinengestell in den Arbeitsbereich und in einem einstellbaren Vertikalabstand sowie in einem einstellbaren Horizontalabstand zu einem Drehpunkt einer Relativbewegung zwischen dem Unterteil und dem Oberteil durch den Arbeitsbereich hindurch emittierbar ist.

Fig. 1 und Fig. 2 zeigen in jeweiligen Perspektivansichten eine als Schwenkbiegemaschine ausgebildete Umformvorrichtung 10. Die Umformvorrichtung 10 weist ein Oberteil 12 und ein Unterteil 14 auf, welche zueinander entsprechend einer durch einen Doppelpfeil verdeutlichten Relativbewegung 20 schwenkbar sind. Das Oberteil 12 und das Unterteil 14 sind vorliegend in einem Maschinengestell 22 aufgenommen, wobei das Maschinengestell 22 einen Arbeitsbereich 28 der Umformvorrichtung 10 zumindest bereichsweise begrenzt. Die Umformvorrichtung 10 umfasst des Weiteren eine Sensoreinrichtung 40 zum zumindest bereichsweisen, berührungslosen Überwachen des Arbeitsbereichs 28 mittels durch die Sensoreinrichtung 40, bzw. mittels eines Emitterbauteils 46 der Sensoreinrichtung 40 emittierbarer Strahlung 42. Diese Strahlung 42 ist vorliegend als Laserstrahlung ausgebildet, wonach dementsprechend das Emitterbauteil 46 als Lasersender ausgestaltet ist. Das Emitterbauteil 46 der Sensoreinrichtung 40 ist an einer dem Arbeitsbereich 28 abgewandten Emitterseite 32 des Maschinengestells 22 angeordnet. Mittels des Emitterbauteils 46 kann die Strahlung 42 durch eine Emitteröffnung 34 in dem Maschinengestell 22 in den Arbeitsbereich 28 emittiert werden. Das Maschinengestell 22 weist ein den Arbeitsbereich 28 seitlich begrenzendes erstes Seitenteil 24 und wenigstens ein den Arbeitsbereich 28 seitlich begrenzendes zweites Seitenteil 26 auf, welche zu jeweils einander gegenüberliegenden Seiten des Arbeitsbereiches 28 angeordnet sind. Mit anderen Worten befindet sich der Arbeitsbereich 28 also zwischen dem ersten Seitenteil 24 und dem zweiten Seitenteil 26 der Umformvorrichtung 10.

Wie insbesondere aus Fig. 2 hervorgeht, weist die Sensoreinrichtung 40 wenigstens ein Empfängerbauteil 48 auf, welches als Laserempfänger ausgestaltet ist und welches an einer von dem Arbeitsbereich 28 abgewandten, der Emitterseite 32 des Maschinengestells 22 gegenüberliegenden Empfängerseite 36 des zweiten Seitenteils 26 angeordnet ist. Mittels des Empfängerbauteils 48 ist die durch das Emitterbauteil 46 emittierbare Strahlung 42 durch eine mit der Emitteröffnung 34 fluchtende Empfängeröffnung 38, welche an dem zweiten Seitenteil 26 angeordnet ist, empfangbar. Fig. 3a zeigt eine Schnittansicht der in Fig. 1 dargestellten Umformvorrichtung 10 entsprechend einer in Fig.1 gekennzeichneten Schnittebene S. Fig. 3b zeigt eine vergrößerte Detailansicht eines in Fig. 3a markierten Bereiches B.

Aus der Zusammenschau von Fig. 3a und Fig. 3b ist erkennbar, dass die Umformvorrichtung 10 an deren Unterteil 14 eine Biegeschiene 16 aufweist, welche zum Umformen (hier: Biegen) eines zwischen dem Oberteil 12 und dem Unterteil 14 fixierbaren Bauteils 54 herangezogen wird. Beim Umformen des Bauteils 54 erfolgt die Relativbewegung 20 als Schwenkbewegung zwischen dem Unterteil 14 und dem Oberteil 12 um einen Drehpunkt 18. Der Drehpunkt 18 verläuft vorliegend durch eine der Biegeschiene 16 zugewandte Kante eines spitz zulaufenden Vorderteils 56 des Oberteils 12. Die Strahlung 42 ist in einem einstellbaren Vertikalabstand V sowie in einem einstellbaren Horizontalabstand H zu dem Drehpunkt 18 der Relativbewegung 20 zwischen dem Unterteil 14 und dem Oberteil 12 durch den Arbeitsbereich 28 hindurch emittierbar. Die Strahlung 42 wird durch ein nicht näher gekennzeichnetes Biegewangenband der Umformvorrichtung 10 geleitet, wobei die Strahlung 42 vorliegend entsprechend der Zeichenebene links versetzt zum Drehpunkt 18 sowie oberhalb des Drehpunktes 18 durch den Arbeitsbereich 28 durchtritt. Der Horizontalabstand H entspricht vorliegend dem horizontalen Abstand zwischen dem Drehpunkt 18 (und damit der Kante des Vorderteils 56 des Oberteils 12) und einem Mittelpunkt M der Strahlung 42. Der Vertikalabstand V entspricht hingegen dem Abstand zwischen der Biegeschiene 16 des Unterteils 14 und dem Mittelpunkt M der Strahlung 42. Ein Strahlengang 44 der Strahlung 42 begrenzt einen Gefahrenbereich 30 des Arbeitsbereichs 28. Der Strahlengang 44 entspricht dabei dem geometrischen Verlauf der Strahlung 42 durch den Arbeitsbereich 28, womit der Strahlengang 44 einerseits einen Durchmesser der Strahlung 42 definiert und andererseits etwaige Ablenkungen der Strahlung 42 beim Durchtritt durch den Arbeitsbereich 28. Der Gefahrenbereich 30 entspricht einem Teilbereich des Arbeitsbereichs 28, in welchem besonders große Verletzungsgefahr für das Bedienpersonal der Umformvorrichtung 10 besteht. Um eine Verletzung - beispielsweise durch Einklemmen von Gliedmaßen zwischen dem Oberteil 12 und dem Unterteil 14 im Bereich des Drehpunktes 18 - des Bedienpersonals der Umformvorrichtung 10 zu vermeiden, ist die Umformvorrichtung 10 mit einer Unterbrechung des Strahlengangs 44 ausschaltbar oder zumindest von einem normalen Betriebszustand, bei welchem die Umformvorrichtung 10 in Normalgeschwindigkeit einen Biegevorgang durchführt, in einen von dem normalen Betriebszustand verschiedenen Zustand schaltbar, in welchem das Umformen z.B. extrem langsam erfolgt und somit ausreichend Zeit für das Bedienpersonal besteht, etwaige Körperteile aus dem Gefahrenbereich 30 zu bewegen. Durch das Einstellen des Vertikalabstandes V und des Horizontalabstandes H kann dabei eine besonders gezielte und lediglich auf den Gefahrenbereich 30 begrenzte Überwachung des Arbeitsraumes 28 erfolgen, wodurch Störungen beim Umformprozess weitgehend unterbunden werden können. Somit besteht kaum mehr die Gefahr, dass der Umformprozess unterbrochen wird, wenn das Bedienpersonal z.B. lediglich an der Umformvorrichtung 10 vorbeigeht, oder sich in dem von dem Gefahrenbereich 30 verschiedenen, restlichen, jedoch ungefährlichen Bereich des Arbeitsbereiches 28 aufhält. Zum sicheren Überwachen der Umformvorrichtung 10 umfasst diese eine mit der Sensoreinrichtung 40 und somit mit dem Emitterbauteil 46 und dem Empfängerbauteil 48 signalübertragend gekoppelte Recheneinrichtung 50, mittels welcher ein von der Sensoreinrichtung 40 in Abhängigkeit von dem Strahlengang 44 abgegebener Signaldatensatz 52 empfangbar und auswertbar ist. Die Umformvorrichtung 10 ist mittels der Recheneinrichtung 50 in einen Notauszustand schaltbar, indem bei einer Unterbrechung des Strahlenganges 44 mittels des für die Unterbrechung charakteristischen Signaldatensatzes 52 durch die Recheneinrichtung 50 eine Notabschaltung ausgelöst wird.

## Patentansprüche

1. Umformvorrichtung (10) zur plastischen Verformung eines Bauteils (54), insbesondere eines Blechbauteils,
- mit einem Oberteil (12) der Umformvorrichtung (10) und mit einem Unterteil (14) der Umformvorrichtung (10), zwischen welchen das Bauteil (54) fixierbar und unter einer Relativbewegung (20) zwischen dem Unterteil (14) und dem Oberteil (12) verformbar ist,
- mit einem das Oberteil (12) und das Unterteil (14) aufnehmenden Maschinengestell (22), welches einen Arbeitsbereich (28) der Umformvorrichtung (10), in welchem das Bauteil (54) verformbar ist, zumindest bereichsweise begrenzt, und
- mit einer Sensoreinrichtung (40), zum zumindest bereichsweisen, berührungslosen Überwachen des Arbeitsbereiches (28) mittels durch die Sensoreinrichtung (40) emittierbarer Strahlung (42),
**dadurch gekennzeichnet, dass**
- die Sensoreinrichtung (40) wenigstens ein Emitterbauteil (46) aufweist, mittels welchem die Strahlung (42) durch mindestens eine Emitteröffnung (34) in dem Maschinengestell (22) in den Arbeitsbereich (28) hinein emittierbar ist, wobei die Emitteröffnung (34) in einem Bereich eines Drehpunkts (18) der Relativbewegung (20) zwischen dem Unterteil (14) und dem Oberteil (12) angeordnet ist, wobei
- das Maschinengestell (22) ein den Arbeitsbereich (28) seitlich begrenzendes erstes Seitenteil (24) und wenigstens ein den Arbeitsbereich (28) seitlich begrenzendes zweites Seitenteil (26) umfasst, welche zu jeweils einander gegenüberliegenden Seiten des Arbeitsbereiches (28) angeordnet sind, und
- die Sensoreinrichtung (40) wenigstens ein Empfängerbauteil (48) aufweist, welches an einer von dem Arbeitsbereich (28) abgewandten, der Emitterseite (32) des Maschinengestells (22) gegenüberliegenden Empfängerseite (36) des zweiten Seitenteils (26) angeordnet ist, wobei
- mittels des Empfängerbauteils (48) die durch das Emitterbauteil (46) emittierbare Strahlung (42) durch eine mit der Emitteröffnung (34) fluchtende Empfängeröffnung (38), welche an dem zweiten Seitenteil (26) angeordnet ist, empfangbar ist.

2. Umformvorrichtung (10) nach Anspruch 1,
**dadurch gekennzeichnet, dass**
das Emitterbauteil (46) an einer dem Arbeitsbereich (28) abgewandten Emitterseite (32) des Maschinengestells (22) angeordnet ist.

3. Umformvorrichtung (10) nach Anspruch 1,
**dadurch gekennzeichnet, dass**
die Emitteröffnung (34) in einem einstellbaren Vertikalabstand (V) sowie in einem einstellbaren Horizontalabstand (H) zu dem Drehpunkt (18) angeordnet ist.

4. Umformvorrichtung (10) nach einem der vorhergehenden Ansprüche,
**dadurch gekennzeichnet, dass**
als der Vertikalabstand (V) der Abstand zwischen einer Biegeschiene (16) des Unterteils (14) und der Strahlung (42) einstellbar ist.

5. Umformvorrichtung (10) nach einem der vorhergehenden Ansprüche,
**dadurch gekennzeichnet, dass**
die Strahlung (42) als Lichtstrahlung, insbesondere als Laserstrahlung, ausgebildet ist.

6. Umformvorrichtung (10) nach einem der vorhergehenden Ansprüche,
**dadurch gekennzeichnet, dass**
die Umformvorrichtung (10) in Abhängigkeit eines Strahlengangs (44) der Strahlung (42) von einem Betriebszustand in wenigstens einen von dem Betriebszustand verschiedenen Zustand schaltbar ist.

7. Umformvorrichtung (10) nach Anspruch 6,
**dadurch gekennzeichnet, dass**
die Umformvorrichtung (10) mit einer Unterbrechung des Strahlengangs (44) ausschaltbar ist.

8. Umformvorrichtung (10) nach einem der Ansprüche 6 oder 7,
**dadurch gekennzeichnet, dass**
die Umformvorrichtung (10) eine Recheneinrichtung (50) umfasst, mittels welcher ein von der Sensoreinrichtung (40) in Abhängigkeit von dem Strahlengang (44) abgegebener Signaldatensatz (52) empfangbar und auswertbar ist.

9. Umformvorrichtung (10) nach Anspruch 8,
**dadurch gekennzeichnet, dass**
die Umformvorrichtung (10) mittels der Recheneinrichtung (50) in einen Notauszustand schaltbar ist.

10. Umformvorrichtung (10) nach einem der vorhergehenden Ansprüche,
**dadurch gekennzeichnet, dass**
die Umformvorrichtung (10) als Schwenkbiegemaschine ausgebildet ist.

## Claims

1. Reshaping device (10) for plastically deforming a component (54), in particular a sheet component,
- including a top part (12) of the reshaping device (10) and including a bottom part (14) of the reshaping device (10), between which the component (54) is fixable and deformable by a relative movement (20) between the bottom part (14) and the top part (12),
- including a machine rack (22) receiving the top part (12) and the bottom part (14), which bounds a working area (28) of the reshaping device (10), in which the component (54) is deformable, at least in certain areas, and
- including a sensor device (40) for non-contact monitoring the working area (28) at least in certain areas by means of radiation (42) capable of being emitted by the sensor device (40),
wherein
- the sensor device (40) comprises at least one emitter component (46) and one receiver component (48), wherein the radiation (42) can be emitted through at least one emitter opening (34) into the working area (28) by means of the emitter component (46), wherein the emitter opening (34) is arranged in an area of a pivot (18) of the relative movement (20) between the bottom part (14) and the top part (12), **characterized in that** the emitter opening (34) is in the machine rack (22) and that
- the machine rack (22) includes a first side part (24) laterally bounding the working area (28) and at least one second side part (26) laterally bounding the working area (28), which are arranged to sides of the working area (28) respectively opposing each other, and
- wherein the receiver component (48) is arranged on a receiver side (36) of the second side part (26) opposing the emitter side (32) of the machine rack (22), facing away from the working area (28), and wherein
- the radiation (42) capable of being emitted by the emitter component (46) can be received by means of the receiver component (48) through a receiver opening (38) aligned with the emitter opening (34), which is arranged at the second side part (26).

2. Reshaping device (10) according to claim 1,
**characterized in that**
the emitter component (46) is arranged on an emitter side (32) of the machine rack (22) facing away from the working area (28).

3. Reshaping device (10) according to claim 1,
**characterized in that**
the emitter opening (34) is arranged in an adjustable vertical distance (V) as well as in an adjustable horizontal distance (H) to the pivot (18).

4. Reshaping device (10) according to any one of the preceding claims,
**characterized in that**
the distance between a bending rail (16) of the bottom part (14) and the radiation (42) is adjustable as the vertical distance (V).

5. Reshaping device (10) according to any one of the preceding claims,
**characterized in that**
the radiation (42) is formed as light radiation, in particular as laser radiation.

6. Reshaping device (10) according to any one of the preceding claims,
**characterized in that**
the reshaping device (10) is switchable from an operating state into at least one state different from the operating state depending on a beam path (44) of the radiation (42).

7. Reshaping device (10) according to claim 6,
**characterized in that**
the reshaping device (10) can be switched off by an interruption of the beam path (44).

8. Reshaping device (10) according to any one of claims 6 or 7,
**characterized in that**
the reshaping device (10) includes a computing device (50), by means of which a signal dataset (52) delivered by the sensor device (40) depending on the beam path (44) can be received and evaluated.

9. Reshaping device (10) according to claim 8,
**characterized in that**
the reshaping device (10) is switchable into an emergency off state by means of the computing device (50).

10. Reshaping device (10) according to any one of the preceding claims,
**characterized in that**
the reshaping device (10) is formed as a swivel bending machine.

## Revendications

1. Appareil de transformation (10), destiné à la déformation plastique d'un composant (54), en particulier d'un composant en tôle,
- avec une partie supérieure (12) de l'appareil de transformation (10) et avec une partie inférieure (14) de l'appareil de transformation (10), entre lesquelles le composant (54) peut être fixé et peut être déformé avec un mouvement relatif (20) entre la partie inférieure (14) et la partie supérieure (12),
- avec un bâti de machine (22), logeant la partie supérieure (12) et la partie inférieure (14), lequel délimite, au moins par secteurs, une zone de travail (28) de l'appareil de transformation (10), dans laquelle le composant (54) peut être déformé et
- avec un dispositif de captage (40), destiné à la surveillance sans contact, au moins par secteurs, de la zone de travail (28) au moyen d'un rayonnement (42), qui peut être émis par le dispositif de captage (40),
- le dispositif de captage (40) présentant au moins un composant formant émetteur (46) et un composant formant récepteur (48), le rayonnement (42) pouvant y être émis par au moins une ouverture d'émission (34) dans la zone de travail (28) au moyen du composant formant émetteur (46), l'ouverture d'émission (34) étant agencée dans une zone d'un point de pivotement (18) du mouvement relatif (20) entre la partie inférieure (14) et la partie supérieure (12),
**caractérisé en ce que**
l'ouverture d'émission (34) est dans le bâti de machine (22) et que
- le bâti de machine (22) comprend une première partie latérale (24) délimitant latéralement la zone de travail (28) et au moins une seconde partie latérale (26) délimitant latéralement la zone de travail (28), lesquelles sont agencées sur des côtés respectivement opposés entre eux de la zone de travail (28) et
- le composant formant récepteur (48) étant agencé sur un côté réception (36) de la seconde partie latérale (26), détourné de la zone de travail (28) opposé au côté émission (32) du bâti de machine (22) et
- le rayonnement (42), pouvant être émis par le composant formant émetteur (46) à travers une ouverture de réception (38), affleurant avec l'ouverture de réception (34), laquelle est agencée sur la seconde partie latérale (26), pouvant être reçu au moyen du composant formant récepteur (48).

2. Appareil de transformation (10) selon la revendication 1,
**caractérisé en ce que**
le composant formant émetteur (46) est agencé sur un côté émission (32) du bâti de machine (22), détourné de la zone de travail (28).

3. Appareil de transformation (10) selon la revendication 1,
**caractérisé en ce que**
l'ouverture d'émission (34) est agencée à une distance verticale réglable (V), ainsi qu'à une distance horizontale réglable (H) par rapport au point de pivotement (18).

4. Appareil de transformation (10) selon l'une des revendications précédentes,
**caractérisé en ce que**
la distance entre un rail de flexion (16) de la partie inférieure (14) et le rayonnement (42) est réglable en tant que distance verticale (V).

5. Appareil de transformation (10) selon l'une des revendications précédentes,
**caractérisé en ce que**
le rayonnement (42) est constitué en tant que rayonnement lumineux, en particulier en tant que rayonnement laser.

6. Appareil de transformation (10) selon l'une des revendications précédentes,
**caractérisé en ce que**
l'appareil de transformation (10) peut être commuté, en fonction d'une trajectoire des rayons (44) du rayonnement (42), d'un état de fonctionnement dans au moins un état différent de l'état de fonctionnement.

7. Appareil de transformation (10) selon la revendication 6,
**caractérisé en ce que**
l'appareil de transformation (10) peut être désactivé par une interruption de la trajectoire des rayons (44).

8. Appareil de transformation (10) selon l'une des revendications 6 ou 7,
**caractérisé en ce que**
l'appareil de transformation (10) comprend un dispositif de calcul (50), au moyen duquel un jeu de données de signaux (52), délivré par le dispositif de captage (40) en fonction de la trajectoire des rayons (44), peut être reçu et évalué.

9. Appareil de transformation (10) selon la revendication 8,
**caractérisé en ce que**
l'appareil de transformation (10) peut être commuté dans un état d'urgence au moyen du dispositif de calcul (50).

10. Appareil de transformation (10) selon l'une des revendications précédentes,
**caractérisé en ce que**
l'appareil de transformation (10) est constitué en tant que machine à cintrer.
